# EUROPÄISCHE PATENTANMELDUNG

(11) **EP 2 426 039 A1**
(43) Veröffentlichungstag der Anmeldung: **07.03.2012**
(21) Anmeldenummer: 11179936.7
(22) Anmeldetag: 02.09.2011
(51) Int. Cl.: B62J 1/28, B62J 11/00

(54) **Vorrichtung zur Mitnahme eines Gepäckstückes auf einem Zweirad**

(30) Priorität: 02.09.2010 CH 14162010
(71) Anmelder: Kutter, Michael, 4059 Basel (CH)
(72) Erfinder: Kutter, Michael, 4059 Basel (CH)
(74) Vertreter: Schneider Feldmann AG Patent- und Markenanwälte

(57) **Zusammenfassung**

Zur Mitnahme von mit einem Zweiradfahrer (2) verbundenen Gepäckstückes (5) wird eine Vorrichtung vorgeschlagen die eine Trägerstruktur (11, 110) umfasst die am Sattel (3) oder der Sattelstütze gehalten ist. Diese Trägerstruktur ist mindestens annähernd auf der Höhe der Sitzfläche des Sattels mit einer Stützfläche versehen. Auf der Stützfläche, die als Stütze für ein vom Zweiradfahrer mittels mindestens eines Riemens auf dem Rücken aufliegendes Gepäckstückes dient, ruht das Gepäckstück und reduziert die zu tragende Last für den Zweiradfahrer.

## Beschreibung

Die vorliegende Erfindung betrifft eine Vorrichtung zur Mitnahme eines mit einem Zweiradfahrer verbundenen Gepäckstückes auf einem Zweirad mit einem auf einer Sattelstütze gehaltenen Sattel mit einer Sitzfläche, die mit Streben mit der Sattelstütze mittelbar verbunden ist.

### Beschreibung

### Hintergrund der Erfindung

Fahrräder, Motorfahrräder, Roller und ähnliche Fahrzeuge, wie beispielsweise auch Elektro-Fahrräder werden immer häufiger als Fortbewegungsmittel für die tägliche Mobilität benutzt, insbesondere als Fahrzeug zur Bewältigung des Arbeitsweges.

Meist werden dabei Arbeitsutensilien insbesondere Notebook Computer mitgeführt, die empfindlich sind auf Erschütterungen oder ganz einfach kostbar sind, und vor Diebstahl geschützt werden müssen. Meist wird daher zum Mitführen des Gepäcks ein Rucksack oder eine ähnliche Tasche zum Umhängen verwendet. All diesen mittels Tragriemen über die Schultern am Körper des Fahrers befestigten Gepäckstücken gemeinsam ist, dass das gesamte Gewicht auf den Schultern des Fahrers lastet.

Dies ist praktisch, weil, ohne weitere Handgriffe, beim Verlassen des Fahrzeugs das (oft kostbare) Gepäck automatisch mitgeführt wird und damit vor Diebstahl geschützt ist.

Nachteilig ist jedoch, dass das Gewicht des mitgeführten Gepäcks während der gesamten Dauer der Fahrt auf den Schultern des Fahrers lastet.

Aus diesem Grund wurde eine Vielzahl verschiedenartigster Gepäcksysteme entwickelt, welche eine sichere Befestigung des Gepäcks auf/ an dem Fahrzeug erlauben, wie zum Beispiel Fahrrad Seitentaschen, oder auch kombinierte Taschen zur Anbringung am Fahrrad und gleichzeitiger Möglichkeit der Mitnahme auf dem Rücken.

US Patent 5,609,278 zeigt ein solches System, bei welchem 2 Taschen wahlweise links und rechts seitlich am Fahrrad befestigt werden können, oder mittels eines Rahmens zu einer Rucksack-ähnlichen Tasche zusammengefügt werden können. Besagter Rahmen kann als Tragrahmen auf dem Rücken des Fahrers oder als Element eines Gepäckträgers verwendet werden.

Nachteilig ist jedoch, dass beim Verlassen des Fahrzeugs, oder bei einer Fortsetzung der Reise zu Fuss, immer erst alles umgebaut werden muss. Ferner kann das System nur benutzt werden auf Fahrrädern, die einen Gepäckträger aufweisen, bzw. für die Montage eines lochen vorgesehen sind. Viele sportliche Fahrräder, wie Mountain Bikes und Rennfahrräder, sind jedoch nicht mit Gepäckträger ausgerüstet, oder haben keine Vorrichtungen zur Befestigung eines Gepäckträgers.

Die bekannten Systeme lösen das Problem der Mitnahme von Gepäckstücken, deren Last der Fahrer nicht auf seinen Schultern tragen möchte, durch Befestigung der entsprechenden Gepäckstücke am Fahrzeug. Dies bedingt entsprechende Vorrichtungen, sowie bei jedem Aufsteigen auf das Fahrzeuge, bzw. beim Verlassen des Fahrzeugs mehrere Handgriffe zur Befestigung des Gepäcks auf dem Fahrzeug.

All diesen Systemen gemeinsam ist, dass bei jedem Verlassen des Fahrzeugs mit mehreren Griffen das Gepäck wieder vom Fahrzeug demontiert und danach wieder montiert werden muss. Ferner ist das Gepäck nicht gut vor Vibrationen geschützt. Benutzer von Notebook Computern verwenden daher nur selten derartige Systeme.

Bisher ist kein Gepäck System bekannt, das die Vorteile von Rucksäcken und Umhänge Taschen auf einfache Weise mit den Vorteilen von unbelasteten Schultern während der Fahrt verbindet.

Für Fahrzeuge ohne Gepäckträger ist überhaupt kein System bekannt, das die Mitnahme von grösseren und schwereren Gepäckstücken erlaubt.

Die vorliegende Erfindung bietet mit ganz einfachen und preiswerten Mitteln eine Lösung für die Mitnahme von Gepäckstücken wie Rucksäcken oder Umhängetaschen, ohne dass deren Gewicht auf den Schultern des Fahrers lastet.

Ferner soll durch die patentgemässe Erfindung überhaupt die Mitnahme von schweren Gepäckstücken auf einem Fahrrad, Motorfahrrad oder Elektro-Fahrrad ohne Gepäckträger ermöglicht werden.

Es ist daher die Aufgabe der vorliegenden Erfindung eine Vorrichtung zu schaffen, die möglichst klein und leicht gestaltet werden kann und speziell so ausgebildet ist, dass ein Gepäckstück, welches der Fahrer des Zweirades mittels einem oder mehreren Riemen auf dem Rücken abstützend mit sich führt, so unterstützt wird, dass das Gewicht des Gepäckstückes weitgehendst auf der Vorrichtung ruht und der mindestens eine Riemen des Gepäckstückes, welches über die Schulter oder die Schultern des Trägers laufen, praktisch entlastet sind.

Diese Aufgabe löst eine Vorrichtung, die sich dadurch auszeichnet, dass sie so an der Sattelstütze oder am Sattel bzw. an deren Streben befestigbar ist, dass diese eine Tragstruktur bildet, die in der Benutzungslage mindestens annähernd auf der Höhe der Sitzfläche eine Stützfläche definiert, welche als eine Stütze für ein vom Zweiradfahrer mittels mindestens eines Riemens auf den Rücken aufliegenden Gepäckstückes dient.

Weitere vorteilhafte Ausführungsformen des Erfindungsgegenstandes gehen aus den abhängigen Ansprüchen hervor.

Die vorliegende Erfindung besteht aus einer Vorrichtung zur Mitnahme von Gepäckstücken auf Fahrräder, Motorfahrrädern, Elektrofahrrädern und ähnliche Fahrzeuge, die hinter dem Sattel des Fahrers mit einer kleinen, vorzugsweise am Sattel selbst befestigten Fläche oder einer andersartigen Tragstruktur das Gewicht eines Rucksacks oder einer Tasche des Fahrers abstützt. Das vorgeschlagene System stützt dabei das gesamte Gewicht der mitgeführten Tasche und der/die Tragriemen dienen lediglich noch der vertikalen Stabilisierung. So können auf Fahrrädern und ähnlichen Fahrzeugen (schwere) Gepäckstücke , wie Rucksäcke, Umhänge Taschen u.a. sehr einfach mitgeführt werden, ohne dass beim Aufsteigen auf das Fahrzeug irgendwelche Handgriffe zur Befestigung auf dem Fahrzeug notwendig sind, und solche Gepäckstücke können auch bequem auf Fahrrädern mitgeführt werden, die für den Transport von Gepäck keinerlei Vorrichtungen wie Gepäckträger u.ä. aufweisen.

Zur Anpassung an verschiedene Taschen und Rucksäcke, sowie verschiedene Körpergrössen der Fahrer sind Mechanismen zur Verstellbarkeit der Höhe und/oder des Winkels der stützenden Fläche vorgesehen.

Damit das System bei Nichtgebrauch nicht weiter störend ist, sind verschiedene Mechanismen zur raschen und einfachen Demontage der Vorrichtung vorgesehen, bzw. Mechanismen um die Vorrichtung in eine nicht störende Nichtgebrauchslage zu bringen.

Das vorgeschlagene System, welches am Sattel oder an der Sattelstütze befestigt wird, kann auch auf Fahrzeugen verwendet werden, welche keinerlei Gepäckträger oder eine ähnliche Einrichtung aufweisen, oder nicht einmal Einrichtungen zur Befestigung eines Gepäckträgers aufweisen.

Ferner wird durch die vorgeschlagene Erfindung ein vorhandener Gepäckträger überhaupt nicht in Anspruch genommen. Das heisst, dass ein Gepäckträgers zusätzlich zum vorgeschlagenen System in vollem Umfang und uneingeschränkt für die Mitnahme von anderen Gepäckstücken zur Verfügung steht. Die vorgeschlagene Erfindung ist in dem Sinne ein vollwertiges "zusätzliches" System zur Mitnahme von Gepäck auf einem Fahrrad. Es ermöglicht somit die Mitnahme von mehr, zusätzlichem Gepäck auf einem Fahrrad oder einem ähnlichen Fahrzeug.

In der Zeichnung sind verschiedene Ausführungsformen des Erfindungsgegenstandes dargestellt und nachfolgend kurz beschrieben. Es zeigt:
- Fig. 1: einen Zweiradfahrer auf einem Fahrrad, ausgerüstet mit der erfindungsgemässen Vorrichtung. In
- Fig. 2: ist eine perspektivische Ansicht einer ersten Ausführungsform in der Benutzungslage dargestellt, und in
- Fig. 3: eine weggeschwenkte und zusammengeschobene Nichtbenutzungslage, und in
- Fig. 4: eine Variante der Nichtbenutzungslage.
- Fig. 5: zeigt eine Halterung sowie den Klemmmechanismus für sich allein ohne die Tragstruktur,
- Fig. 6: offenbart eine zweite, zweiteilige Ausführungsform bei der der erste Teil der Tragstruktur als Schlaufe gebildet ist und der zweite Teil der Tragstruktur als Klemmmechanismus am Sattel gehalten ist, wobei der schlaufenförmige Teil höhenverschiebbar im zweiten Teil gleitend gehalten ist.
- Fig. 7: zeigt diese beiden Teile der Tragstruktur für sich allein, während in
- Fig. 8: lediglich der eine Teil, der eine form- und kraftschlüssige Steckverbindung mit dem Sattel ermöglicht, dargestellt ist. In
- Fig. 9: ist eine weitere Alternative dargestellt, bei der im Sattel zwei Steckhülsen integriert sind und die Tragstruktur aufsteckbar ist, wie dies in
- Fig. 10: zusammengebaut dargestellt ist.
- Fig. 11: zeigt eine Variante der Ausführung nach den Figuren 9 und 10, bei der die Tragstruktur eine schwenkbare Platte umfasst, während letztlich in
- Fig. 12: eine Tragstruktur mit einer Halterung entsprechend der Figur 5 realisiert ist, in einer Ansicht von oben, wobei die eigentliche Tragstruktur aus zwei schwenkbaren Teilflächen besteht.

In der beanspruchten Lösung wird verlangt, dass die Vorrichtung eine Tragstruktur aufweist, deren Stützfläche mindestens annähend auf der Höhe der Sitzfläche angeordnet ist. Hierbei soll unter dem Relativbegriff "annähernd" verstanden sein, dass der die stützende Wirkung ausübende Teil der Tragstruktur eine Fläche definiert, welche bis zu 5 cm unter oder oberhalb der Sitzfläche des Sattels angeordnet sein kann. Diese Bedingung ergibt sich aus der Tatsache, dass Tragriemen von Rucksäcken und Umhängetaschen zwar verstellbar sind, da man aber nicht jedes mal die Verstellung vornehmen will, und man eine optimale Abstützung erhalten will, ist dies dem subjektiven Empfinden des Benutzers überlassen, diese Stützfläche entsprechend auf die richtige Höhe einzustellen.

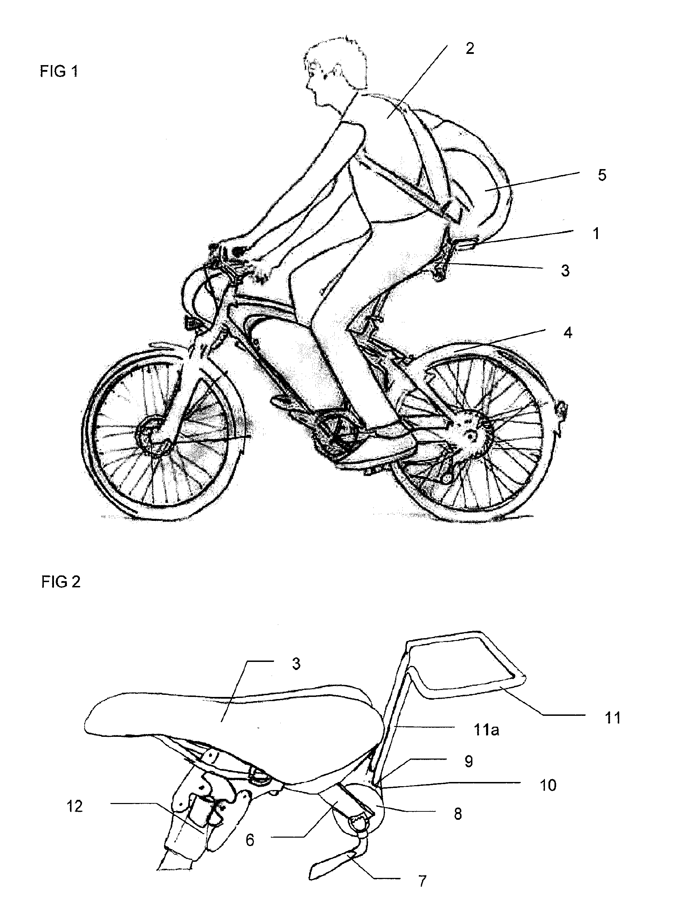

Figur 1 zeigt einen Fahrer 2, der auf dem Sattel 3 eines Fahrrades 4 sitzt, und auf seinen Schultern einen Rucksack 5 trägt, dessen Gewicht durch eine patentgemässe Vorrichtung 1 abgestützt wird.

Figur 2 zeigt eine besonders vorteilhafte Ausführung der Erfindung bestehend aus einer U-förmigen Halterung 6, die Bestandteil des Sattels ist 3, oder mittels Schrauben und Klemmmechanismus am Sattel befestigt wird, oder die lediglich in die tragende Struktur des Sattels eingehängt wird. In der Halterung wird ein die beiden Schenkel verbindender Schnellspanner 7 befestigt, auf dessen Achse ein Körper 8 drehbar gelagert ist. Der drehbar gelagert Körper weist 2 durchgehende Bohrungen 9 auf mit bis zu den Bohrungen reichenden Schlitzen 10, sodass das entsprechende Gegenstück 11 - die mit 2 entsprechenden Stiften 11a versehene, das Gepäckstück abstützende Fläche in die Bohrungen gesteckt werden kann. Durch Festziehen des Schnellspanners 7 kann aufgrund der durch die Schlitze ermöglichten Klemmwirkung auf die Stifte 11a der das Gepäckstück stützende Einsatz 11 in beliebiger Höhe fixiert werden. Gleichzeitig ergibt sich aus der drehbaren Lagerung des klemmenden Körpers 8 eine Verstellbarkeit des Winkels für die das Gepäckstück tragende Fläche. Ferner kann ebenso aufgrund der Drehbarkeit des klemmenden Körpers der das Gepäck tragende Einsatz in eine Nichtgebrauchs Lage gebracht werden.

Eine handelsübliche Sattelstütze 12 trägt den Sattel 3; in der dargestellte Ausführung ist diese Sattelstütze gefedert.

In der in Figur 2 dargestellten Ausführung wird für die Abstützung des Gepäckstücks lediglich eine Rahmenkonstruktion verwendet. Stattdessen kann eine Fläche aus einem beliebigen Material verwendet werden, oder z.B. eine den Rahmen ausfüllende Bespannung verwendet werden.

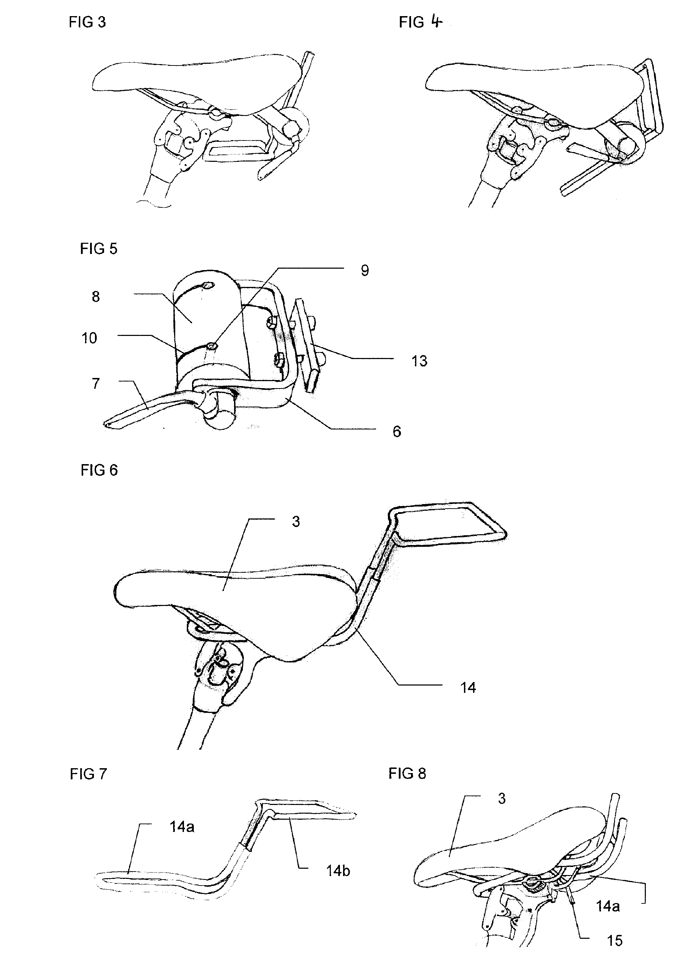

Ein weiterer Vorteil der dargestellten Ausführung besteht darin, dass bei Nichtgebrauch die das Gepäckstück abstützende Vorrichtung in eine in Figur 3 und 4 dargestellte Nichtgebrauchslage gedreht werden und in dieser fixiert werden kann, in welcher sie für die Fahrt möglichst wenig störend ist. Ebenso können die Stifte 11a vollständig aus den Bohrungen 8 herausgezogen und damit dieser Teil der Vorrichtung vollständig entfernt werden, sodass lediglich die kaum störende Halterung auf dem Fahrzeug verbleibt.

Die Halterung selbst kann Bestandteil des Sattels sein und in diesem Falle entsprechend unauffällig gestaltet oder komplett in die Konstruktion des Sattels integriert sein.

Ebenso kann die Halterung 6 so ausgestaltet sein, dass lediglich durch eine Drehbewegung in die Tragkonstruktion des Sattels eingehängt werden kann.

Figur 5 zeigt eine solche Ausführung, bei welcher zwei Bolzen oder Schrauben eine Gegenplatte 13 in einem Abstand zur Halterung 6 fixieren, welcher dem Durchmesser der Metallprofile der Tragkonstruktion von handelsüblichen Sätteln entsprechen. Dadurch kann die Gegenplatte zwischen die beiden Rundprofile eingeführt werden und anschliessend durch eine Drehbewegung die beiden Profile zwischen Gegenplatte 13 und Halterung 6 eingeklemmt werden.

Eine ganz einfache Ausführung der Erfindung ist in Figur 6 dargestellt. Eine längliche Konstruktion 14, vorzugsweise aus dünnen Rohren umschliesst den vorderen Teil des Sattels 3 auf der Unterseite. Im hinteren Bereich wird die Vorrichtung durch einen Stift 15, der durch die beiden Profile der Sattel-Tragkonstruktion gesteckt wird nach oben Gedrückt, wie in Figur 8 dargestellt.

Damit kann die Vorrichtung auf einfachste Weise in die Konstruktion eines handelsüblichen Sattels eingehängt werden und ist zugleich aufgrund der weit auseinander liegenden Auflagepunkte sehr solide abgestützt, sodass auch schwere Gepäckstücke solide abgestützt werden können. Die Konstruktion ist trotz dieser Eigenschaften extrem leicht und extrem kostengünstig zu fertigen. Sie kann aus einem einzigen Stück gefertigt sein, oder sie kann, wie in der dargestellten Ausführung von FIG 7, aus 2 Teilen bestehen, einem vorzugsweise aus einem Rohr gefertigten vorderen Teil 14a, in den der hintere Teil 14b gesteckt wird. Auch diese extrem simple und kostengünstige Ausführung ermöglicht eine Höhenverstellbarkeit, sowie eine ganz rasche und einfache Demontage des hinteren Teils 14b. Eine einfache und praktische Lösung weist 2 auf die Stifte 14a aufgesteckte Anschläge 14c auf, die mittels einer Klemmschraube in einer beliebigen Höhe fixiert werden können. Dadurch wird beim Montieren der Vorrichtung, d.h. beim Einführen der Stifte des hinteren Teils 14b in den vorderen Teil der Vorrichtung automatisch die für den Gepäcktransport vorgesehene Fläche auf der vom Fahrer voreingestellten Höhe arretiert.

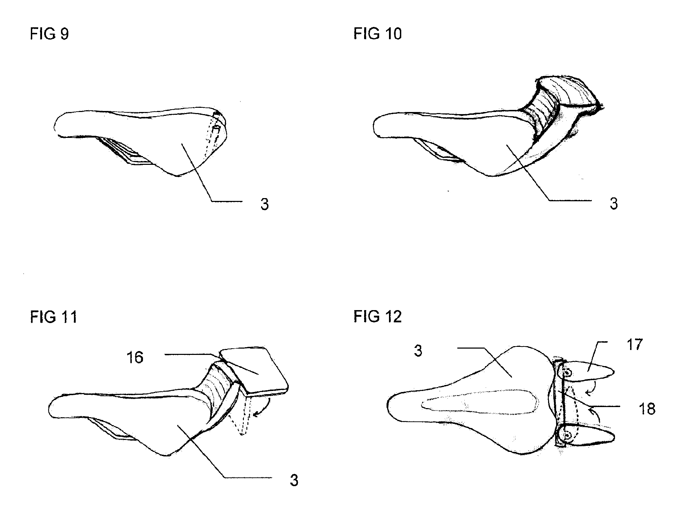

In Figur 9 ist eine industrielle Lösung dargestellt, welche bereits in der Konstruktion des Sattels Öffnungen aufweist, in welche eine das Gepäckstück stützende Fläche oder ähnliche Struktur mit entsprechenden Stiften gemäss einem der entsprechenden Ansprüche gesteckt werden kann.

Eine integrative Lösung, bei welcher der Sattel 3 als ein Bauteil ausgebildet ist und eine Fläche zur Abstützung des mitgeführten Gepäcks bietet, ist in Figur 10 dargestellt.

Figur 11 zeigt eine Ausführung der Erfindung mit einem Sattel 3, der im hinteren Bereich eine Erhöhung, ähnlich einem Ansatz zu einer Lehne aufweist, an welcher eine Fläche 17 schwenkbar angebracht ist, die bei Nichtgebrauch vertikal nach unten geklappt werden kann und bekannte Arretierungsmechanismen aufweist zur Fixierung der Fläche 17 in horizontaler Position.

In Figur 12 ist eine Ausführung dargestellt, welche zu Abstützung des mitgeführten Gepäcks 2 kleinere Flächen 17 verwendet, die mittels einer Halterung 18 am Sattel 3 befestigt werden, um eine ungefähr vertikale Achse schwenkbar sind, und mittels bekannter Mechanismen, wie beispielsweise Klemmmechanismen in Gebrauchslage oder Nichtgebrauchslage fixiert werden können. Einige derartige Mechanismen, wie beispielsweise ein Klemmmechanismus ermöglichen gleichzeitig eine Höhenverstellbarkeit entlang der vertikalen Drehachse.

## Patentansprüche

1. Vorrichtung zur Mitnahme eines mit einem Zweiradfahrer verbundenen Gepäckstückes auf einem Zweirad mit einem auf einer Sattelstütze gehaltenen Sattel mit einer Sitzfläche, die mit Streben mit der Sattelstütze mittelbar verbunden ist, **dadurch gekennzeichnet, dass** die Vorrichtung so an der Sattelstütze oder am Sattel bzw. an deren Streben befestigbar ist, dass diese eine Tragstruktur bildet, die in der Benutzungslage mindestens annähernd auf der Höhe der Sitzfläche eine Stützfläche definiert, welche als eine Stütze für ein vom Zweiradfahrer mittels mindestens eines Riemens auf den Rücken aufliegenden Gepäckstückes dient.

2. Vorrichtung nach Anspruch 1, **dadurch gekennzeichnet, dass** die Tragstruktur an den Streben des Sattels befestigbar ist.

3. Vorrichtung nach Anspruch 1, **dadurch gekennzeichnet, dass** am Sattel und/oder der Sattelstütze eine Halterung (6) mit Klemmmechanismus angeordnet ist, mittels welchem die Tragstruktur (11, 110) höhen- und winkelverstellbar fixierbar ist.

4. Vorrichtung nach Anspruch 1, **dadurch gekennzeichnet, dass** die Tragstruktur selbst form- und/oder kraftschlüssig am Sattel bzw. deren Streben angeordnet ist.

5. Vorrichtung nach Anspruch 4, **dadurch gekennzeichnet, dass** die Tragstruktur unlösbar mit dem Sattel verbunden ist.

6. Vorrichtung nach Anspruch 4, **dadurch gekennzeichnet, dass** die Tragstruktur lösbar mit dem Sattel verbunden ist.

7. Vorrichtung nach Anspruch 1, **dadurch gekennzeichnet, dass** die Tragstruktur aus mindestens zwei Teilen besteht, die relativ zueinander beweglich sind.

8. Vorrichtung nach Anspruch 7, **dadurch gekennzeichnet, dass** die mindestens zwei Teile ineinander schiebbar sind und eine Höhenverstellung ermöglichen.

9. Vorrichtung nach Anspruch 7, **dadurch gekennzeichnet, dass** die mindestens zwei Teile schwenkbeweglich sind.

10. Vorrichtung nach Anspruch 9, **dadurch gekennzeichnet, dass** die mindestens zwei schwenkbeweglichen Teile von einer Nichtgebrauchsposition in eine Gebrauchsposition schwenkbar sind.

11. Vorrichtung nach Anspruch 7, **dadurch gekennzeichnet, dass** die mindestens zwei Teile so relativ zueinander verschiebbar und/oder schwenkbar sind, dass sich damit eine grössenverstellbare Tragstruktur ergibt.

12. Vorrichtung nach Anspruch 11, **dadurch gekennzeichnet, dass** die mindestens zwei Teile eine Nürnberger Schere bilden.

13. Vorrichtung nach Anspruch 1, **dadurch gekennzeichnet, dass** die Tragstruktur auch flächige Teile umfasst.

14. Vorrichtung nach Anspruch 7, **dadurch gekennzeichnet, dass** die Tragstruktur aus starren und flexiblen Teilen besteht.

15. Vorrichtung nach Anspruch 1, **dadurch gekennzeichnet, dass** die Tragstruktur aus Draht- oder Rohrelementen gebogen ist, die eine Stützfläche definierende Schlaufe bilden und sich am Sattel kraft- und/oder formschlüssig zu halten vermag.
